# EUROPÄISCHE PATENTSCHRIFT

(11) **EP 1 674 377 B1**
(45) Veröffentlichungstag und Bekanntmachung des Hinweises auf die Patenterteilung: **02.05.2012**
(21) Anmeldenummer: 05021113.5
(22) Anmeldetag: 28.09.2005
(51) Int. Cl.: B62D 21/09

(54) **Anordnung zumindest eines Aggregatelagers an einem Hilfsrahmen**
Arrangement of at least one support for an aggregate on a subframe
Arrangement d'au moins un support pour un agrégat sur un berceau auxiliaire

(30) Priorität: 23.12.2004 DE 102004062083
(43) Veröffentlichungstag der Anmeldung: 28.06.2006
(73) Patentinhaber: AUDI AG, 85045 Ingolstadt (DE)
(72) Erfinder: Kramer, Tobias, 85139 Wettstetten (DE); Rugies, Stefan, 85120 Hepberg (DE)
(74) Vertreter: Asch, Konrad

(56) Entgegenhaltungen:
- WO-A-98/08727
- DE-A1- 19 625 380
- DE-U1- 9 011 077

## Beschreibung

Die Erfindung betrifft ein Kraftfahrzeug mit einem Hilfsrahmen und einem daran angeordneten Aggregatelager gemäß dem Oberbegriff des Patentanspruches 1.

Aggregate wie Brennkraftmaschinen, Geschwindigkeits-Wechselgetriebe, Differenziale, etc. für Kraftfahrzeuge sind i.a. über schwingungs- und geräuschdämpfende Lager am Aufbau bzw. an mit dem Aufbau verbundenen Hilfsrahmen (auch als Fahrschemel bezeichnet) abgestützt. Die Aggregatelager sind dabei zwischen aufbauseitigen Konsolen und aggregateseitigen Stützen angeordnet und definieren eine konstruktiv vorgegebene Lage des Aggregates im Kraftfahrzeug. Sollen an einem Modell eines Kraftfahrzeuges verschiedene Aggregate (z. B. 4-Zylinder und 6-Zyinder Motore) verbaut werden, so sind zur vorgegebenen Positionierung des Aggregates aufwändige Maßnahmen erforderlich, z. B. unterschiedliche Konsolen, ggf. sogar unterschiedliche Hilfsrahmen.

Aus der WO 98/08727 A ist eine gattungsgemäße Anordnung eines Aggregatlagers bekannt. Das Aggregatlager ist über eine Konsole an einem aus Längsträger und Querträger bestehenden Rahmen montiert. Die Konsole kann dabei in unterschiedlichen Stellungen mit dem Rahmen verschraubt werden.

Aufgabe der Erfindung ist es, ein Kraftfahrzeug mit einem Hilfsrahmen vorzuschlagen, bei dem mit geringem baulichen Mehraufwand die Verbauung unterschiedlicher Aggregate ermöglicht und zudem eine besonders steife Aggregateabstützung sichergestellt ist.

Diese Aufgabe wird erfindungsgemäß mit den Merkmalen des Patentanspruches 1 gelöst. Vorteilhafte Weiterbildungen der Erfindung beschreiben die weiteren Patentansprüche.

Erfindungsgemäß wird vorgeschlagen, dass die zumindest eine Konsole in unterschiedlichen Stellungen mit dem Hilfsrahmen verschraubbar ist, wobei diese Stellungen unterschiedliche Positionen des Aggregatelagers relativ zum Hilfsrahmen bewirken. Es wird also eine einheitliche Konsole verwendet, die durch geeignete Maßnahmen relativ zum einheitlichen Hilfsrahmen quasi verstellbar ist, z. B. weiter nach vorne oder hinten verschiebbar ist.

Dabei wird erfindungsgemäß zur Erzielung einer besonders biegesteifen Abstützung die Konsole zusätzlich über ein separates Anschlussteil mit dem Hilfsrahmen verschraubt, wobei mit baulich und montagetechnisch geringem Mehraufwand unterschiedliche Anschlussteile für die unterschiedlichen Stellungen der Konsole verwendet sind.

Durch die Verwendung nur einer einheitlichen Konsole kann diese besonders zweckmäßig einstückig mit dem Gehäuse des Aggregatelagers ausgebildet sein, wodurch der bauliche Aufwand weiter vermindert ist.

Die Konsole ist erfindungsgemäß mit einem der Längsträger des Hilfsrahmens und das Anschlussteil mit ebenfalls dem Längsträger und dem Querträger verschraubt. Dadurch wird eine besonders ecksteife Verbindung geschaffen, bei der die Konsole tragend in die Verbindung eingeschaltet ist.

Baulich und montagegünstig verbindet ferner eine einheitliche Schraubverbindung die Konsole und das Anschlussteil mit dem Längsträger, wobei Befestigungsaugen der Konsole zwischen dem Längsträger und dem Anschlussteil positioniert sind.

Am Längsträger sind mehrere, zueinander versetzte Bohrungen für die Schraubverbindung mit der Konsole und dem Anschlussteil vorgesehen.

Baulich und montagegünstig kann ferner eine einheitliche Schraubverbindung die Konsole und das Anschlussteil mit dem Längsträger verbinden, wobei Befestigungsaugen der Konsole zwischen dem Längsträger und dem Anschlussteil positioniert sind.

Dabei können des weiteren zur verbesserten Zugänglichkeit bei der Montage die Befestigungsschrauben am Längsträger und die Befestigungsschrauben zwischen dem Anschlussteil und dem Querträger horizontal ausgerichtet sein.

Zur Erzielung einer günstigen Abstützbasis bei der Anbindung der Konsole können die Schraubverbindung am Längsträger des Hilfsrahmens an einem oberhalb des Längsträgers angeformten Längsflansch und die Befestigungsschrauben zwischen dem Anschlussteil und dem Querträger unterhalb des Längsträgers positioniert sein. Dabei ist es ferner vorteilhaft, wenn die Schraubverbindung zwischen dem Querträger und dem Anschlussteil mit definiertem Abstand innerhalb des Längsträgers angeordnet ist, so dass sich eine dreieckförmige Abstützbasis einstellt.

Die Konsole kann in an sich bekannter Weise ein Gussteil (z.B. aus einer Al-Legierung) und das Anschlussteil ein einfach zu fertigendes Blechpressteil sein.

Am Längsträger sind mehrere, zueinander versetzte Bohrungen für die Schraubverbindung mit der Konsole und dem Anschlussteil vorgesehen.

Dabei kann bevorzugt der mögliche Versatz von Konsole und Anschlussteil relativ zum Längsträger durch im Bereich der unteren Schraubverbindung zum Querträger unterschiedliche Anschlussteile kompensiert werden. Somit sind lediglich unterschiedliche, fertigungstechnisch einfache Anschlussteile bereitzustellen, die nach Bedarf verbaut werden. Es wäre alternativ jedoch auch möglich, z.B. mittels Zwischenbauteile wir Hülsen, etc. den Versatz zu kompensieren.

Bei der Verwendung unterschiedlicher Anschlussteile kann bevorzugt lediglich der untere Befestigungsflansch des Anschlussteiles zum Querträger entsprechend dem möglichen Versatz von Konsole und Anschlussteil versetzt ausgebildet sein.

In vorteilhafter Weiterbildung der Erfindung können zwei hintereinander liegende Befestigungsaugen der Konsole durch ein nach oben ragendes und den aggregateseitigen Lageranschluss bzw. z.B. eine Motorstütze umschließendes Brückenglied miteinander verbunden sein. Daraus resultiert eine besonders kompakte Konstruktion der Konsole, die deren mittragender Eigenschaft in der Aggregateabstützung Rechnung trägt.

Ferner kann es zur Vereinfachung der Montage des Aggregates vorteilhaft sein, wenn auch die Schraubverbindung zwischen dem aggregateseitigen Lageranschluss (der Motorstütze) und dem Lagerkern des Aggregatelagers mittels einer horizontal ausgerichteten Befestigungsschraube erfolgt. Dabei können die entsprechenden Anschlussflächen zwischen dem aggregateseitigen Lageranschluss und dem Lagerkern in vertikaler Richtung formschlüssig ausgeführt sein, wodurch die Montage weiter erleichtert und die Festigkeit der Verbindung verstärkt ist.

Ein Ausführungsbeispiel der Erfindung ist im folgenden mit weiteren Einzelheiten näher erläutert. Die schematische Zeichnung zeigt in:
- Fig. 1: eine Anordnung eines Aggregatelagers an einem teilweise dargestellten Hilfsrahmen für Kraftfahrzeuge mit Explosions-Darstellung der Einzelteile Hilfsrahmenabschnitt - Konsole mit Aggregatelager - Anschlussteil; und
- Fig. 2: die Anordnung nach Fig. 1 im montierten Zustand.

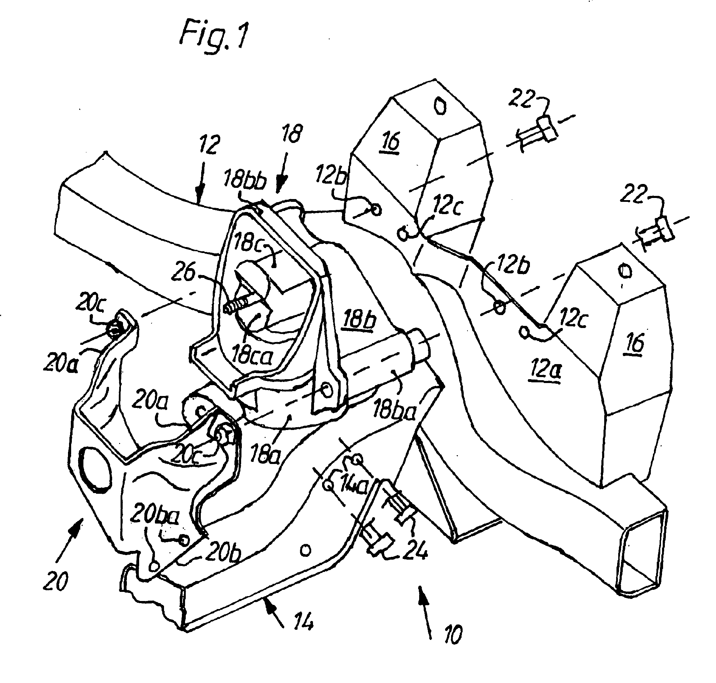

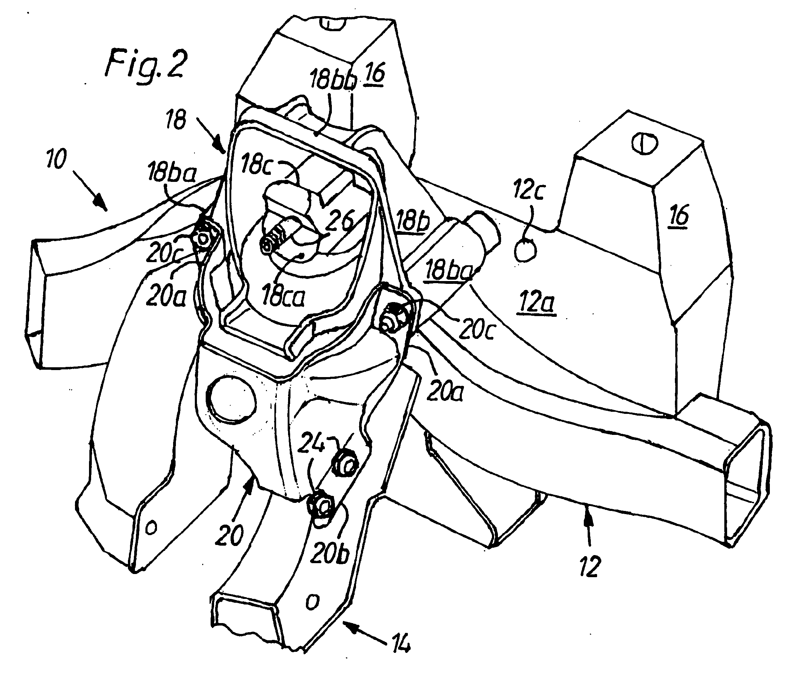

In den **Fig. 1** **und** **2** ist abschnittsweise ein Hilfsrahmen 10 für Kraftfahrzeuge dargestellt, mit einem seitlichen Längsträger 12 und einem vorderen Querträger 14, die fest miteinander verschweißt sind.

Der Hilfsrahmen 10 weist in bekannter Weise zwei seitliche, rohrförmige Längsträger 12 und zwei rohrförmige oder im Querschnitt U-förmige Quer-träger 14 auf, die zu einem in der Draufsicht gesehen etwa quadratischem Rahmenteil verbunden und mit einem nicht ersichtlichen Aufbau eines Kraftfahrzeuges über Anbauten 16 und/oder direkt verschraubt sind. Der hintere Querträger (oder umgekehrt) kann auch durch ein Anbauteil, z. B. ein Zahnstangen-Lenkgetriebe gebildet sein. Ferner kann der Hilfsrahmen 10 mit Anschlüssen für Radaufhängungsteile, etc versehen sein. Der Hilfsrahmen 10 ist nur soweit beschrieben und dargestellt, als dies für das Verständnis der vorliegenden Erfindung erforderlich ist.

Auf dem Hilfsrahmen 10 ist ein nicht dargestelltes Antriebsaggregat, z.B. eine Brennkraftmaschine und ein Geschwindigkeits-Wechselgetriebe, über mehrere Aggregatelager 18 schwingungs- und geräuschgedämpft abgestützt; es ist nur ein Aggregatelager 18 ersichtlich, es können aber weitere Aggregatelager 18 - z. B. spiegelbildlich gegenüber liegend und/oder hintereinander liegend - vorgesehen sein.

Das Aggregatelager 18 setzt sich zusammen aus einem Gehäuse 18a und einer einstückig mit dem Gehäuse 18a ausgebildeten Konsole 18b. In dem Gehäuse 18a ist ein an sich bekanntes Aggregatelager (z. B. ein hydraulisch gedämpftes Lager) integriert, dessen Lagerkern 18c nach oben abragt und mit einem aggregateseitigen Lageranschluss (im Ausführungsbeispiel einer nicht dargestellten Motorstütze) fest verbindbar ist.

Die Konsole 18b aus einem Gussteil aus einer Al-Legierung weist zwei hintereinander liegende hülsenförmige Befestigungsaugen 18ba auf, die über ein nach oben ragendes und den Lageranschluss 18c umschließendes Brückenglied 18bb miteinander verbunden sind.

In einem nach oben ragenden und im wesentlichen parallel zur Fahrtrichtung des Kraftfahrzeuges verlaufenden Flansch 12a des Längsträgers 12 sind erste Bohrungen 12b eingearbeitet, die mit den Bohrungen in den Befestigungsaugen 18ba übereinstimmen und eine erste Stellung des Aggregatelagers 18 relativ zum Hilfsrahmen 10 definieren.

In dem Flansch 12a des Längsträgers 12 sind ferner zweite Bohrungen 12c eingearbeitet, die eine weiter vorne liegende zweite Stellung des Aggregatelagers 18 relativ zum Hilfsrahmen 10 bestimmen.

Des weiteren ist zur Befestigung des Aggregatelagers 18 am Hilfsrahmen 10 ein wie ersichtlich dreidimensional verformtes, schalenförmiges und aus einem Stahl-Blechpressteil hergestelltes Anschlussteil 20 vorgesehen, das mit seitlich abragenden Armen 20a an der Konsole 18 bzw. den Befestigungsaugen 18ba anliegt und nach unten abragend einen parallel zum Querträger 14 verlaufenden Befestigungsflansch 20b aufweist.

Das Aggregatelager 18 wird mittels zweier oberer Befestigungsschrauben 22 mit dem Hilfsrahmen 10 verschraubt, wobei die Befestigungsschrauben 22 den Flansch 12a entweder in der ersten Stellung durch die Bohrungen 12b oder in der zweiten, weiter vorne liegenden Montagestellung durch die Bohrungen 12c durchdringen. Es versteht sich, dass ggf. auch weitere, entsprechend versetzte Bohrungen vorgesehen sein können.

Sodann erstrecken sich die Befestigungsschrauben 22 durch die einen definierten Abstand des Anschlussteiles 20 zum Flansch 12a herstellenden Befestigungsaugen 18ba der Konsole 18b und durch die korrespondierenden Bohrungen (ohne Bezugszeichen) in den Armen 20a der Anschlussteile 20. Zur Vereinfachung der Montage sind an die Arme 20a Gewindemuttern 20c angeschweißt, in die die Befestigungsschrauben 22 eingeschraubt sind.

Die untere und innerhalb des Flansches 12a liegende Befestigung des Anschlussteiles 20 erfolgt mittels zweier Befestigungsschrauben 24, die sich durch entsprechende Bohrungen 14a des Querträgers 14 und durch entsprechende Bohrungen 20ba des Befestigungsflansches 20b erstrecken. Am Befestigungsflansch 20b oder am Querträger 14 können ggf. weitere Gewindemuttern zur Vereinfachung der Montage angeschweißt sein.

Wie aus den Fig. 1 und 2 der Zeichnung ersichtlich ist, bilden die beiden Schraubverbindungen 22, 24 eine dreieckförmige Abstützbasis des Aggregatelagers 18 am Hilfsrahmen 10, wobei die Konsole 18b bzw. deren hülsenförmige Befestigungsaugen 18ba zwischen den Armen 20a des Anschlusstelles 20 und dem Flansch 12a des Längsträgers 12 eingespannt und somit eine mittragende Funktion übernehmen.

Wie ferner aus der Zeichnung ersichtlich ist, erstrecken sich die Befestigungsschrauben 22, 24 im wesentlichen in horizontaler Richtung und sind deshalb von der Seite bzw. von vorne des Kraftfahrzeuges zu Montagezwecken zugänglich.

Das gleiche gilt für die Befestigungsschraube 26, die sich etwa horizontal durch den Lagerkern 18c des Aggregatelagers 18 erstreckt und zur Befestigung eines nicht dargestellten Lageranschlusses bzw. einer Motorstütze dient. Die Anschlussfläche 18ca ist dabei in vertikaler Richtung formschlüssig wirkend ausgebildet, um neben einer Montagevereinfachung eine zuverlässige und robuste Verbindung zwischen der Motorstütze und dem Lagerkern 18c herzustellen. Die korrespondierenden Anschlussflächen 18ca von Motorstütze (nicht dargestellt) und Lagerkern 18c können wie im Ausführungsbeispiel wie ein liegendes V oder aber L-förmig ausgeführt sein.

Zur Anpassung des Anschlussteiles 20 an die zwei unterschiedlichen Stellungen des Aggregatelagers 18 sind zwei unterschiedliche Anschlussteile 20 vor-gesehen, deren unterer Befestigungsflansch 20b entsprechend angepasst ist, also einmal näher und einmal entfernter mit Bezug zum Querträger 14 geformt ist.

Ggf. könnte aber auch der Befestigungsflansch 20b einmal vor und einmal hinter dem Querträger 14 montiert werden, sofern die Stärke des Querträgers 14 gleich dem Versatz der Bohrungen 12b und 12c im Flansch 12a des Längsträgers 12 konzipiert ist. Des weiteren könnten zur Kompensation der unter-schiedlichen Stellungen des Aggregatelagers 18 Abstandshülsen zwischen dem Querträger 14 und dem Befestigungsflansch 20b des Anschlussteiles 20 verwendet sein, so dass das Anschlussteil 20 als solches ebenfalls einheitlich verwendbar wäre.

Durch den möglichen Versatz des Aggregatelagers 18 relativ zum Hilfsrahmen 10 können unterschiedliche Aggregate mit entsprechend versetzten Lageranschlüssen bzw. Motor- und/oder Getriebestützen verbaut werden. Dies schließt selbstverständlich nicht aus, dass die Aggregatelager 18 in ihrer Kennung unterschiedlich sein können; das Gehäuse 18a und die Konsole 18b wären trotzdem vorteilhaft Gleichteile mit entsprechend günstigen Fertigungskosten.

## Patentansprüche

1. Kraftfahrzeug mit einem Hilfsrahmen und einem daran angeordneten Aggregatelager, wobei der Hilfsrahmen (10) seitliche Längsträger (12) und zumindest einen diese verbindenden Querträger (14) aufweist und das Aggregatelager (18) über eine Konsole (18b) biegesteif mit dem Hilfsrahmen (10) verschraubt ist, wobei die Konsole (18b) in unterschiedlichen Stellungen mit dem Hilfsrahmen (10) verschraubbar ist, wobei diese Stellungen unterschiedliche Positionen des Aggregatelagers (18) relativ zum Hilfsrahmen (10) bewirken, und wobei die Konsole (18b) zusätzlich über ein separates Anschlussteil (20) in einer Schraubverbindung (24) mit dem Hilfsrahmen (10) verschraubt ist, wobei am. Längsträger (12) und/oder am angeformten Längsflansch (12a) mehrere, zueinander versetzte Bohrungen (12b, 12c) für eine Schraubverbindung (22) mit der Konsole (18b) und dem Anschlussteil (20) vorgesehen sind, **dadurch gekennzeichnet, dass** unterschiedliche Anschlussteile (20) für die unterschiedlichen Stellungen der Konsole (18b) verwendet sind, dass die unterschiedlichen Anschlussteile (20) in einem Bereich (20b) der Schraubverbindung (24) einen Versatz von Konsole (18b) und Anschlussteil (20) relativ zum Längsträger (12)kompensieren, und dass die Konsole (18b) mit einem der Längsträger (12) des Hilfsrahmens (10) und das Anschlussteil (20) mit ebenfalls dem Längsträger (12) und dem Querträger (14) verschraubt ist.

2. Kraftfahrzeug nach Anspruch 1, **dadurch gekennzeichnet, dass** die Konsole (18b) einstückig mit dem Gehäuse (18a) des Aggregatelagers (18) ausgebildet ist.

3. Kraftfahrzeug nach einem oder mehreren der vorhergehenden Ansprüche, **dadurch gekennzeichnet, dass** eine einheitliche Schraubverbindung (22) die Konsole (18b) und das Anschlussteil (20) mit dem Längsträger (12) verbindet, wobei Befestigungsaugen (18ba) der Konsole (18b) zwischen dem Längsträger (12) und dem Anschlussteil (20) positioniert sind.

4. Kraftfahrzeug nach einem oder mehreren der vorhergehenden Ansprüche, **dadurch gekennzeichnet, dass** die Befestigungsschrauben (22) am Längsträger (12) im Wesentlichen horizontal ausgerichtet sind.

5. Kraftfahrzeug nach einem oder mehreren der vorhergehenden Ansprüche, **dadurch gekennzeichnet, dass** die Befestigungsschrauben (24) zwischen dem Anschlussteil (20) und dem Querträger (14) horizontal ausgerichtet sind.

6. Kraftfahrzeug nach einem oder mehreren der vorhergehenden Ansprüche, **dadurch gekennzeichnet, dass** die Schraubverbindung (22) am Längsträger (12) an einem oberhalb des Längsträgers (12) angeformten Längsflansch (12a) und die Befestigungsschrauben (24) zwischen dem Anschlussteil (20) und dem Querträger (14) unterhalb des Längsträgers (12) positioniert sind.

7. Kraftfahrzeug nach Anspruch 6, **dadurch gekennzeichnet, dass** die Schraubverbindung (24) zwischen dem Querträger (14) und dem Anschlussteil (20) mit definiertem Abstand innerhalb des Längsträgers (12) angeordnet ist.

8. Kraftfahrzeug nach einem oder mehreren der vorhergehenden Ansprüche, **dadurch gekennzeichnet, dass** die Konsole (18b) ein Gussteil und das Anschlussteil (20) ein Blechpressteil ist.

9. Kraftfahrzeug nach einem der vorhergehenden Ansprüche, **dadurch gekennzeichnet, dass** der mögliche Versatz von Konsole (18b) und Anschlussteil (20) relativ zum Längsträger (12) durch im Bereich der unteren Schraubverbindung (24) zum Querträger (14) unterschiedliche Anschlussteile (20) kompensiert ist.

10. Kraftfahrzeug nach Anspruch 9, **dadurch gekennzeichnet, dass** der untere Befestigungsflansch (20b) des Anschlussteiles (20) zum Querträger (14) entsprechend dem möglichen Versatz von Konsole (18b) und Anschlussteil (20) entsprechend versetzt ausgebildet ist.

11. Kraftfahrzeug nach einem oder mehreren der vorhergehenden Ansprüche, **dadurch gekennzeichnet, dass** zwei hintereinander liegende Befestigungsaugen (18ba) der Konsole (18b) durch ein nach oben ragendes und den aggregateseitigen Lageranschluss umschließendes Brückenglied (18bb) miteinander verbunden sind.

12. Kraftfahrzeug nach einem oder mehreren der vorhergehenden Ansprüche, **dadurch gekennzeichnet, dass** die Schraubverbindung zwischen dem aggregateseitigen Lageranschluss und dem Lagerkern (18c) des Aggregatelagers (18) mittels einer horizontal ausgerichteten Befestigungsschraube (26) erfolgt.

13. Kraftfahrzeug nach Anspruch 12, **dadurch gekennzeichnet, dass** die entsprechenden Anschlussflächen (18ca) zwischen dem aggregateseitigen Lageranschluss und dem Lagerkern (18c) in vertikaler Richtung formschlüssig ausgeführt sind.

## Claims

1. Motor vehicle having a subframe and having a power unit mount arranged thereon, wherein the subframe (10) has lateral longitudinal beams (12) and at least one transverse beam (14) which connects said longitudinal beams, and the power unit mount (18) is screwed in a flexurally rigid manner to the subframe (10) via a bracket (18b), wherein the bracket (18b) can be screwed to the subframe (10) in different positions, wherein said positions yield different positions of the power unit mount (18) relative to the subframe (10), and wherein the bracket (18b) is additionally screwed to the subframe (10) via a separate attachment part (20) by a screw connection (24), wherein on the longitudinal beam (12) and/or on the longitudinal flange (12a) integrally formed thereon there are provided a plurality of bores (12b, 12c), which are offset with respect to one another, for a screw connection (22) to the bracket (18b) and to the attachment part (20), **characterized in that** different attachment parts (20) are used for the different positions of the bracket (18b), **in that** the different attachment parts (20), in a region (20b) of the screw connection (24), compensate an offset of the bracket (18b) and attachment part (20) relative to the longitudinal beam (12), and **in that** the bracket (18b) is screwed to one of the longitudinal beams (12) of the subframe (10) and the attachment part (20) is screwed likewise to the longitudinal beam (12) and to the transverse beam (14).

2. Motor vehicle according to Claim 1, **characterized in that** the bracket (18b) is formed in one piece with the housing (18a) of the power unit mount (18).

3. Motor vehicle according to one or more of the preceding claims, **characterized in that** a unitary screw connection (22) connects the bracket (18b) and the attachment part (20) to the longitudinal beam (12), wherein fastening lugs (18ba) of the bracket (18b) are positioned between the longitudinal beam (12) and the attachment part (20).

4. Motor vehicle according to one or more of the preceding claims, **characterized in that** the fastening screws (22) on the longitudinal beam (12) are aligned substantially horizontally.

5. Motor vehicle according to one or more of the preceding claims, **characterized in that** the fastening screws (24) are aligned horizontally between the attachment part (20) and the transverse beam (14).

6. Motor vehicle according to one or more of the preceding claims, **characterized in that** the screw connection (22) is positioned on the longitudinal beam (12) on a longitudinal flange (12a) integrally formed above the longitudinal beam (12), and the fastening screws (24) are positioned between the attachment part (20) and the transverse beam (14) below the longitudinal beam (12).

7. Motor vehicle according to Claim 6, **characterized in that** the screw connection (24) between the transverse beam (14) and the attachment part (20) is arranged at a defined distance inward from the longitudinal beam (12).

8. Motor vehicle according to one or more of the preceding claims, **characterized in that** the bracket (18b) is a cast part and the attachment part (20) is a sheet-metal pressed part.

9. Motor vehicle according to one of the preceding claims, **characterized in that** the possible offset of the bracket (18b) and attachment part (20) relative to the longitudinal beam (12) is compensated by attachment parts (20) which differ in the region of the lower screw connection (24) to the transverse beam (14).

10. Motor vehicle according to Claim 9, **characterized in that** the lower fastening flange (20b) of the attachment part (20) is formed so as to be correspondingly offset with respect to the transverse beam (14) in a manner corresponding to the possible offset of the bracket (18b) and attachment part (20).

11. Motor vehicle according to one or more of the preceding claims, **characterized in that** two fastening lugs (18ba), situated one behind the other, of the bracket (18b) are connected to one another by an upwardly projecting bridge element (18bb) which surrounds the power-unit-side mount attachment.

12. Motor vehicle according to one or more of the preceding claims, **characterized in that** the screw connection between the power-unit-side mount attachment and the mount core (18c) of the power unit mount (18) is realized by means of a horizontally aligned fastening screw (26).

13. Motor vehicle according to Claim 12, **characterized in that** the corresponding attachment surfaces (18ca) between the power-unit-side mount attachment and the mount core (18c) are formed so as to provide a positive locking action in the vertical direction.

## Revendications

1. Véhicule automobile comprenant un châssis auxiliaire et un palier de groupe disposé sur celui-ci, le châssis auxiliaire (10) présentant des supports longitudinaux latéraux (12) et au moins une traverse (14) les reliant, et le palier de groupe (18) étant vissé de manière rigide en flexion par le biais d'une console (18b) au châssis auxiliaire (10), la console (18b) pouvant être vissée dans différentes positions au châssis auxiliaire (10), ces positions entraînant des positions différentes du palier de groupe (18) par rapport au châssis auxiliaire (10), et la console (18b) étant en outre vissée au châssis auxiliaire (10) par le biais d'une pièce de raccordement séparée (20) dans une connexion par vissage (24), plusieurs alésages (12b, 12c) décales les uns par rapport aux autres étant prévus sur le support longitudinal (12) et/ou sur la bride longitudinale façonnée (12a) pour une connexion pas vissage (22) à la console (18b) et à la pièce de raccordement (20), **caractérisé en ce que** différentes pièces de raccordement (20) pour les différentes positions de la console (18b) sont utilisées, **en ce que** les différentes pièces de raccordement (20), dans une région (20b) de la connexion par vissage (24) compensent un décalage de la console (18b) et de la pièce de raccordement (20) par rapport au support longitudinal (12), et **en ce que** la console (18b) est vissée à l'un des supports longitudinaux (12) du châssis auxiliaire (10) et la pièce de raccordement (20) est vissée également au support longitudinal (12) et à la traverse (14).

2. Véhicule automobile selon la revendication 1, **caractérisé en ce que** la console (18b) est réalisée d'une seule pièce avec le boîtier (18a) du palier de groupe (18).

3. Véhicule automobile selon l'une quelconque ou plusieurs des revendications précédentes, **caractérisé en ce qu'**une connexion par vissage unitaire (22) relie la console (18b) et la pièce de raccordement (20) au support longitudinal (12), des oeillets de fixation (18ba) de la console (18b) étant positionnés entre le support longitudinal (12) et la pièce de raccordement (20).

4. Véhicule automobile selon l'une quelconque ou plusieurs des revendications précédentes, **caractérisé en ce que** les vis de fixation (22) sont orientées essentiellement horizontalement sur le support longitudinal (12).

5. Véhicule automobile selon l'une quelconque ou plusieurs des revendications précédentes, **caractérisé en ce que** les vis de fixation (24) sont orientées horizontalement entre la pièce de raccordement (20) et la traverse (14).

6. Véhicule automobile selon l'une quelconque ou plusieurs des revendications précédentes, **caractérisé en ce que** la connexion par vissage (22) sur le support longitudinal (12) est positionnée sur une bride longitudinale (12a) façonnée au-dessus du support longitudinal (12) et les vis de fixation (24) sont positionnées entre la pièce de raccordement (20) et la traverse (14) sous le support longitudinal (12).

7. Véhicule automobile selon la revendication 6, **caractérisé en ce que** la connexion par vissage (24) entre la traverse (14) et la pièce de raccordement (20) est disposée à une distance définie à l'intérieur du support longitudinal (12).

8. Véhicule automobile selon l'une quelconque ou plusieurs des revendications précédentes, **caractérisé en ce que** la console (18b) est une pièce coulée et la pièce de raccordement (20) est une pièce moulée par compression en tôle.

9. Véhicule automobile selon l'une quelconque des revendications précédentes, **caractérisé en ce que** le décalage possible de la console (18b) et de la pièce de raccordement (20) par rapport au support longitudinal (12) est compensé par différentes pièces de raccordement (20) dans la région de la connexion par vissage inférieure (24) à la traverse (14).

10. Véhicule automobile selon la revendication 9, **caractérisé en ce que** la bride de fixation inférieure (20b) de la pièce de raccordement (20) à la traverse (14) est réalisée de manière décalée en conséquence de manière correspondant au décalage possible de la console (18b) et de la pièce de raccordement (20).

11. Véhicule automobile selon l'une quelconque ou plusieurs des revendications précédentes, **caractérisé en ce que** deux oeillets de fixation (18a) de la console (18b), situés l'un derrière l'autre, sont connectés l'un à l'autre par un organe de pont (18bb) saillant vers le haut et entourant le raccord de palier du côté du groupe.

12. Véhicule automobile selon l'une quelconque ou plusieurs des revendications précédentes, **caractérisé en ce que** la connexion par vissage entre le raccord de palier du côté du groupe et le coeur de palier (18c) du palier de groupe (18) a lieu au moyen d'une vis de fixation (26) orientée horizontalement.

13. Véhicule automobile selon la revendication 12, **caractérisé en ce que** les faces de raccordement correspondantes (18ca) entre le raccord de palier du côté du groupe et le coeur de palier (18c) sont réalisées par engagement par correspondance géométrique dans la direction verticale.
